# EUROPEAN PATENT APPLICATION

(11) **EP 2 083 173 A1**
(43) Date of publication of application: **29.07.2009**
(21) Application number: 08001393.1
(22) Date of filing: 25.01.2008
(51) Int. Cl.: F04D 27/02, F04D 29/42, F01D 17/14, F02B 37/22

(54) **Radial compressor and method of operating a radial compressor**

(71) Applicant: GM Global Technology Operations, Inc., Detroit MI 48265-3 (US)
(72) Inventor: Andersen, Johannes, 16736 Bromma (SE)
(74) Representative: Strauss, Peter

(57) **Abstract**

A radial compressor (1) comprises an impeller (2) having an impeller axis (3) about which the impeller (2) rotates to compress a fluid, an inlet (12) in flow communication with the impeller (2), an outlet (14) in flow communication with the impeller (2), restriction means (6) positionable within the inlet (12), and an inducer (4) defined by the cross-sectional area over which the fluid impacts the impeller (2) when the inlet (12) is in an unrestricted condition (8). The restriction means (6) is adjustable so as to reduce the cross-sectional area of the inlet (12) adjacent the inducer (4) and so as to cause a fluid having a mass velocity to impact the impeller (2) whilst the mass velocity of the fluid comprises a non-uniform distribution across the cross-sectional area of the inducer (4).

## Description

The invention relates to a radial compressor, for example a radial compressor of an exhaust driven turbocharger for an internal combustion engine and to a method of operating the radial compressor.

The operating range of the compressor of a turbocharger is described by a compressor map of pressure ratio against mass flow which is limited by surge, that is unstable flow, at the low end and choke at the high end. The distance from surge to choke in the compressor map is referred to as the compressor range which describes the useful operating range of the compressor.

The surge line of the compressor map defines the lowest flow rate at which a compressor can operate in a stable condition. Moving the surge line of the compressor to a lower mass flow rate permits stable operation of the compressor at lower flow rates and engine speeds.

It is known to increase the compressor map width by moving the surge line to a lower mass flow rate by creating a swirling motion of the incoming air in the compressor inlet. Apparatus for achieving a pre-whirl effect is known from US 2004/00963164, for example. However, this solution has the disadvantage that creating the pre-whirl of the intake air is complicated.

Therefore, it is an object of the invention to provide a radial compressor and a method of operating the radial compressor which is simple to perform and which increases the compressor map width.

This object is solved by the subject matter of the independent claims. Further improvements are the subject matter of the dependent claims.

According to the invention, the radial compressor comprises an impeller having an impeller axis about which the impeller rotates to compress a fluid, an inlet in flow communication with the impeeler, an outlet in flow communication with the impeller and restriction means positionable within the inlet and an inducer defined by the cross-sectional area over which the fluid impacts the impeller when the inlet is in an unrestricted condition.

The restriction means is adjustable so as to reduce the cross-sectional area of the inlet adjacent to the inducer. The restriction means is also adjustable so as to cause a fluid having a mass velocity to impact the impeller whilst the mass velocity of the fluid comprises a non-uniform distribution across the cross-sectional area of the inducer.

According to the invention, the fluid has a mass velocity distribution which is non-uniform across the cross-sectional area of the inducer. Therefore, regions of the impeller within the area defined by the inducer are impacted by a fluid having a higher mass velocity and other regions of the impeller within the area of the inducer are impacted by a fluid having a lower mass velocity.
The non-uniform mass velocity of the fluid as it impacts the impeller varies across the cross-sectional area of the inducer has the effect of moving the surge limit of the compressor to lower mass velocities. Therefore, by use of the restriction means the compressor can operate stably at lower mass flow rates and lower engine speeds. The extended range of the compressor provided by use of the restriction means enables the engine size to be decreased while maintaining performance due to the extended supercharging of the engine. This has the further advantageous consequence that fuel consumption is reduced as a result of the smaller engine.

The use of a restriction means positionable within the inlet and adjustable so as to produce a non-uniform distribution of the mass velocity of the fluid across the cross-sectional area of the inducer has the advantage that it is simple to control the distribution of the mass velocity of the fluid. Such an arrangement is, therefore, useful in smaller engines which not only have restricted space requirements but are often desired to the more cheaply manufactured.

The restriction means of the invention differs from guide forms to create pre-whirl in that, according to the invention, the two-dimensional area distribution of the mass velocity of the fluid is non-uniform across the cross-sectional area of the inducer. In methods for producing a pre-whirl or for throttling the fluid intake upstream of the compressor, a component of the direction of the velocity and the average mass flow, respectively, are changed. However, the distribution of the mass velocity across the cross-sectional area of the inducer is not affected by the guides and, in contrast to the invention, is uniform across the cross-sectional area of the inducer.

In an embodiment, the restriction means is positionable within the inlet so that the mass velocity of the fluid impacting the impeller comprises, with respect to the impeller axis, an asymmetric distribution across the cross-sectional area of the inducer.

For example, the restriction means may be positionable within the inlet so that the mass velocity of the fluid on one side of the impeller axis is greater than the mass velocity of the fluid on the other side of the impeller axis. This may be provided by positioning a restriction means in the form of a blockage in a lower portion of the inlet, for example.

In an embodiment, the restriction means is a blockage positioned within the inlet such that the regions of the inducer positioned directly behind the blockage are not impacted by the fluid and the remaining regions of the inducer are impacted by the fluid.

In a further embodiment, the restriction means is positionable within the inlet so that the average mass velocity of air is increased downstream of the restriction means in comparison to the average mass velocity upstream of the restriction means.

This may be provided by providing a restriction means in the form of a member having a cross-sectional area. Since this member is positioned within the inlet, the cross-sectional area of the inlet through which the fluid can flow is reduced at this position. Therefore, the mass flow of the fluid which is able to flow through the portion of the inlet which is unoccupied by the restriction means is increased.

In an embodiment, the restriction means is adjustable so as to reduce the cross-sectional area of the inducer which is impacted by the fluid. This can be provided by positioning the restriction means upstream of the impeller by a distance sufficiently small that the non-uniform two-dimensional distribution of the mass velocity fluid is retained at the inducer. The region of the inducer positioned directly downstream of the restriction means is not impacted by the fluid and the mass flow of the fluid in this region is essentially zero. The restriction means may be positioned directly in front of the impeller or at a predetermined distance.

The restriction means may be adjustable so that it is able to occupy a varying portion of the cross-sectional area of the inlet so that the cross-sectional area of the inducer and, therefore, of the impeller which is impacted by the fluid can be correspondingly varied.

This may be achieved by increasing the cross-sectional area of the restriction means which is positioned within the inlet. For example, at higher mass flows, the restriction means may be positioned so that it occupies no area of the inlet and the inlet remains unrestricted. The restriction means may be adjusted so that an increasingly larger portion of the restriction means is introduced into the inlet as the mass flow is reduced. This may be achieved, for example, by a flap such as a pivotable flap which may be gradually raised so as to protrude further into the inlet thus occupying a greater proportion of the cross-sectional area of the inlet and thus increasingly decrease the cross-sectional area of the impeller which is impacted by the fluid.

In a further embodiment, the cross-sectional area of the inducer is reduced by 10% to 60%.

The restriction means may be adjustable so that the cross-sectional area of the inlet can be variably reduced. The reduction in cross-sectional area may be carried out dependent on the mass flow rate, for example. In an embodiment, the restriction means is pivotable about a pivot axis so as to variably reduce the cross-sectional area of the inlet. The pivot axis may extend in a direction generally perpendicular to the impeller axis or in a direction generally parallel to the impeller axis. The cross-sectional area of the inlet may be increasingly reduced by increasing the angle by which the restriction means is pivoted about the pivot axis. Similarly, the cross-sectional area of the inlet may be increased by decreasing the angle by which the restriction means is pivoted about the pivot axis.

As previously mentioned, the distance between the impeller and the restriction means may be selected so that the fluid impacting the impeller has the desired non-uniform distribution across the area of the inducer. In an embodiment, the restriction means is positioned directly upstream of the inducer.

In further embodiments the distance between the impeller and the restriction means is selected dependent on the compressor size. The distance between the impeller and the restriction means may lie between 1 mm and a distance equal to 1.5 times the diameter of the inducer and/or the distance between the impeller and the restriction means at its closest point to the impeller lies between 1 mm and a distance equal to 1.5 times the diameter of the inducer.

The restriction means may be provided in the form of a trapezoid, wherein the downstream side face has a larger cross-section than the upstream side face. The degree to which the cross-sectional area of the intellect is restricted may be adjusted by raising and lowering the restriction means so that the cross-sectional area of the downstream side face is increased and decreased, respectively.

In an alternative embodiment, the restriction means is provided in the form of a half-cylinder.

The invention also provides a turbocharger comprising a radial compressor according to one of the embodiments previously described. In a further embodiment, the turbocharger is an exhaust driven turbocharger.

The invention also provides an internal combustion engine comprising the compressor according to one of the embodiments previously described as well as a vehicle comprising the internal combustion engine.

In a further embodiment, the invention provides a radial compressor housing. The housing comprises a cutout and a restriction means. The cutout provides an inlet, an outlet and a scroll for accommodating an impeller having an inducer and an impeller axis about which the impeller rotates to compress a fluid. The inducer is defined by the cross-sectional area over which the fluid impacts the impeller when the inlet is in an unrestricted condition. The inlet the scroll and the outlet are in flow communication with one another. The restriction means is positionable within the inlet and is adjustable so as to reduce the cross-sectional area of the inlet adjacent the inducer. The restriction means is also adjustable so as to cause a fluid to impact the impeller whilst comprising a mass velocity comprising a non-uniform distribution across the cross-sectional area of the inducer.

In an embodiment, the restriction means is positionable within the inlet so that the mass velocity of the fluid entering the inducer comprises, with respect to the impeller axis, an asymmetric distribution across the cross-sectional area of the inducer.

The restriction means may also be positionable within the inlet so that the average mass velocity of air is increased downstream of the restriction means in comparison to the average mass velocity upstream of the restriction means.

In an embodiment, the restriction means is adjustable so as to reduce the cross-sectional area of the inlet and may be adjustable so that the cross-sectional area of the inlet is restrictable by 10% to 60%.

The restriction means may be adjustable so that the cross-sectional area of the inlet can be variably reduced. The reduction in cross-sectional area may be carried out dependent on the mass flow rate, for example. In an embodiment, the restriction means is pivotable about a pivot axis so as to variably reduce the cross-sectional area of the inlet. The pivot axis may extend in a direction generally perpendicular to the impeller axis or in a direction generally parallel to the impeller axis. The cross-sectional area of the inlet may be increasingly reduced by increasing the angle by which the restriction means is pivoted about the pivot axis. Similarly, the cross-sectional area of the inlet may be increased by decreasing the angle by which the restriction means is pivoted about the pivot axis.

The position of the restriction means within the inlet is selected so that the restriction means produces the desired non-uniform distribution of the mass velocity of the fluid across the cross-sectional area of the inducer. In further embodiments, the restriction means is positioned directly upstream of the inducer and/or such that the distance between the impeller and the restriction means lies between 1 mm and a distance equal to 1.5 times the diameter of the inducer and/or such that the distance between the impeller and the restriction means at its closest point to the impeller lies between 1 mm and a distance equal to 1.5 times the diameter of the inducer.

In further embodiments, the restriction means is provided in the form of a flap and/or a trapezoid, wherein the downstream side face has a larger cross-sectional area than the upstream side face or a half cylinder.

The invention also provides a method for operating a radial compressor. The radial compressor comprises an impeller having an impeller axis about which the impeller rotates to compress a fluid, an inlet in flow communication with the impeller, an outlet in flow communication with the impeller and an inducer defined by the cross-sectional area over which the fluid impacts the impeller when the inlet is in an unrestricted condition. The method comprises restricting the cross-sectional area of the inlet so as to cause the fluid to impact the impeller whilst comprising a mass velocity comprising a non-uniform distribution across the cross-sectional area of the inducer.

By creating a fluid flow with a non-uniform distribution of the mass velocity across the cross-sectional area of the inducer, the surge limit of the compressor can be moved to lower mass flow rates. The surge limit of the compressor is therefore lowered and the compressor map width increased.

In an embodiment, the cross-sectional area of the inlet is restricted by positioning restriction means within the inlet.

The degree to which the cross-sectional area of the inlet is reduced may be adjustable and may be adjusted depending on the average mass flow of the fluid upstream of the restriction means.

For example, the cross-sectional area of the inlet may be reduced when the average mass flow of the fluid upstream of the restriction means is less than 0.06 kg/s. The cross-sectional area of the inlet may be restricted when the average mass flow of the fluid entering the inlet is less than 0.06 kg/s.

The restriction means is adjusted to reduce the cross-sectional area of the inlet through which fluid can flow by 10% to 60%. The reduction in the cross-sectional area of the inducer may be increasingly increased for decreasing mass flows.

The restriction means may pivoted about a pivot axis so as to variably reduce the cross-sectional area of the inlet. In an embodiment, the restriction means is pivoted about a pivot axis extending in a direction generally perpendicular to the impeller axis. In a further embodiment, the restriction means is pivoted about a pivot axis extending in a direction generally parallel to the impeller axis.

Embodiments will now be described with reference to the accompanying drawings.
- Figure 1: illustrates schematically a side view of a radial compressor comprising an impeller and an adjustable restriction means,
- Figure 2: illustrates a front view of the compressor of figure 1 when the restriction means is positioned in front of the impeller,
- Figure 3: illustrates a front view of the compressor of figure 1 when the restriction means is not positioned in front of the impeller,
- Figure 4: illustrates a compressor map of a radial compressor comprising an impeller and a restriction means according to a first embodiment,
- Figure 5: illustrates a radial compressor housing comprising a restriction means according to the first embodiment,
- Figure 6: illustrates a radial compressor housing comprising a restriction means according to a second embodiment,
- Figure 7: illustrates a radial compressor housing comprising a restriction means according to a third embodiment,
- Figure 8: illustrates a radial compressor housing comprising a restriction means according to a fourth embodiment,
- Figure 9: illustrates a radial compressor housing comprising a restriction means according to a fifth embodiment,
- Figure 10: illustrates a side view of a radial compressor comprising an impeller and an adjustable restriction means according to a sixth embodiment,
- Figure 11: illustrates a front view of a radial compressor according to a seventh embodiment when the adjustable restriction means is positioned outside of the inducer, and
- Figure 12: illustrates a front view of the compressor of figure 11 when the adjustable restriction means is positioned in front of the inducer.

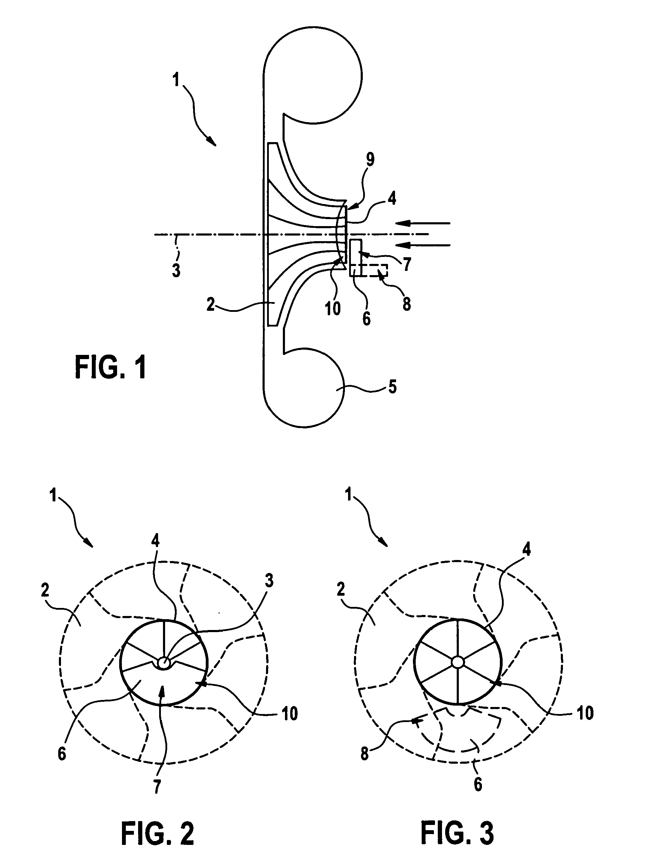

Figures 1 to 3 illustrate a radial compressor 1 according to a first embodiment of the invention in schematic form. Figure 1 illustrates a side view of the radial compressor 1 which comprises an impeller 2 which rotates about an impeller axis 3. The radial compressor 1 is a component of a non-illustrated turbocharger. The impeller 2 is coupled by a non-illustrated shaft which extends along and is concentric with the impeller axis 3 to a non-illustrated turbine which drives the impeller 2 of the compressor 1 in order to compress a fluid.

The radial compressor 1 comprises an inducer 4 which is defined by the cross-sectional area over which the fluid impacts the impeller 2 when an inlet is in an unrestricted condition. In this embodiment, the inducer 4 is an axial inducer positioned concentric with the impeller axis 3. In the view of Figure 1, the incoming fluid which is to be compressed flows from right to left into the inducer 4 as depicted by the arrows. Also illustrated in figure 1, is the compressor scroll 5 which also includes a non-illustrated outlet through which the compressed fluid exits the compressor 1 radially. The fluid which is compressed is air in the case of a turbocharger of an internal combustion engine of a vehicle.

According to the invention, the radial compressor 1 further comprises restriction means 6 which is positionable in a region of the compressor inlet upstream of the inducer 4. The restriction means 6 is adjustable so as to reduce the cross-sectional area of the inlet adjacent and upstream of the inducer 4.

Two positions of the restriction means 6 are illustrated schematically in figure 1. The solid line 7 illustrates the location of the restriction means 6 upstream of the inducer 4 such that the cross-sectional area of the inlet is reduced and depicts the restricted position. The dotted line 8 illustrates the restriction means 6 positioned adjacent the inlet such that the cross-sectional area of the inlet is not reduced and depicts the unrestricted position.

When the restriction means 6 is in the position illustrated by the solid line 7, a fluid having a mass velocity and flowing towards the inducer 4 is directed to a portion 9 of the inducer 4 positioned laterally adjacent the restriction means 6 in position 7. In the view of figure 1, the fluid is directed towards the top of the inducer 4 in region 9. The fluid fails to impact region 10 of the inducer 4 which is positioned downstream and behind the restriction means 6 when in position 7.

Therefore, the mass velocity of the fluid has a non-uniform two-dimensional distribution across the cross-sectional area of the inducer 4 and is higher in region 9 than in region 10. The restriction means 6 provides a blockage in order to reduce the cross-sectional area of the inlet and the cross-sectional area of the inducer 4 over which the fluid flows impacts the impeller 2. The fluid is concentrated towards the portion 9 of the impeller 2 so that the fluid impacts the impeller 2 with a non-uniform distribution across the inducer 4.

Figures 2 and 3 illustrate a front view of the radial compressor 1 of figure 1. Figure 2 illustrates the radial compressor 1 when the restriction means 6 is positioned in front of the inducer 4 and illustrates the restricted position 7 of the restriction means 6 of figure 1.

Figure 3 illustrates a front view of the radial compressor 1 of figure 1 when the restriction means 6 is positioned outside of the inducer 4 and illustrates the unrestricted position 8 of the restriction means 6 of figure 1.

A comparison of figures 2 and 3 illustrates that the cross-sectional area of the inducer 4 through which the fluid can enter the compressor 1 is reduced when the restriction means 6 is in position 7.

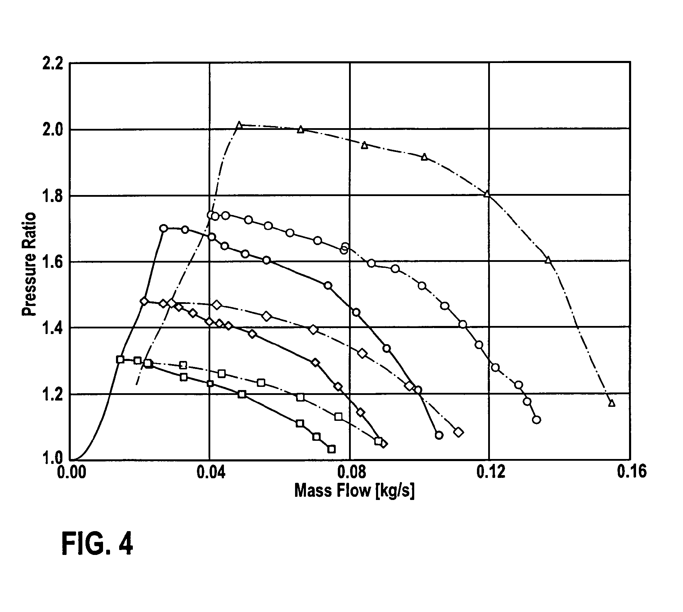

The restriction means 6 is positioned in the inlet so that the fluid impacting the impeller 2 has a non-uniform distribution across the area of the inducer 4. The restriction means 6 may, therefore, the positioned directly upstream of the inducer 4 so as to restrict the fluid flow to the region 10 of the inducer 4 positioned directly downstream of the restriction means 6. The effect of the restriction means 6 on the compressor map of the compressor 1 is illustrated in figure 4.

Figure 4 illustrates a graph of pressure ratio against mass flow for the radial compressor 1. Such diagrams are referred to as the compressor map of the compressor and it illustrates the range over which the compressor operates stably. The position of end of the curves at the low mass flow side are determined by the phenomenon of compressor surge.

Two sets of curves are illustrated in figure 4. The set of curves illustrated by the dashed lines represent a compressor map for the radial compressor 1 in which the restriction means 6 is positioned outside of the inducer. Therefore, these curves represent the unrestricted position 8 of the restriction means 6 illustrated in figures 1 and 3.

The set of curves indicated with solid lines depict the compressor map for the radial compressor 1 when the restriction means 6 restricts the cross-sectional area of the inlet at low mass flow rates resulting in a non-uniform mass flow distribution across the cross-sectional area of the inducer 4. This illustrates the compressor map for the compressor when the restriction means 6 is in the restricted position 7 as illustrated in figures 1 and 2.

Figure 4 illustrates a specific embodiment in which the restriction means 6 was positioned 21 mm upstream of the inducer 4 and in which 23% of the area of the inlet is occupied by the restriction means 6 in position 7. The general form of the compressor map illustrated in figure 4 and, in particular, the movement of the surge line to lower mass flow rates is, however, also achieved by restrictions means 6 having other positions within the inlet and for other percentage reductions of the cross-sectional area of the inlet.

Figure 4 illustrates that the use of the restriction means 6 at low mass flow rates to reduce the cross-sectional area of the inlet adjacent the inducer 4 and to create a non uniform distribution of the mass velocity of the fluid across the cross-sectional area of the inducer 4 results in the surge limit of the compressor map being moved to lower mass flow values. Therefore, the compressor may be operated in a stable condition at low mass flow values when the restriction means 6 is positioned within the inlet than is possible when no restriction means 6 is provided. Therefore, the restriction means 6 results in an increase in the width of the compressor map and an increase in the range over which the compressor 1 can be operated.

The extended range of the compressor provided by use of the restriction means enables the engine size to be decreased while maintaining performance due to the extended supercharging of the engine. This has the further advantageous consequence that fuel consumption is reduced as a result of the smaller engine.

The invention also provides a method of operating the radial compressor 1 in order to increase the width of the compressor map. The radial compressor 1 comprises an impeller 2 having an impeller axis 3 about which the impeller 2 rotates to compress a fluid. The radial compressor also comprises an inlet in flow communication with the impeller 2 and an outlet in flow communication with the impeller 2. The method comprises restricting the cross-sectional area of the inlet so as to cause the fluid to impact the impeller 2 whilst comprising a mass velocity comprising a non-uniform distribution across the cross-sectional area of the inducer 4.

The cross-sectional area of the inlet can be restricted when the average mass flow of the fluid upstream of the restriction means is less than a certain value in order to prevent compressor surge. The value of mass flow that which compressor surge occurs varies depending on the compressor map of the compressor. A typical value may be a mass flow of less than 0.06 kg/s.

The degree to which the cross-sectional area of the inlet is restricted may also be controlled dependent on the mass flow. For increasingly smaller mass flows of fluid, the cross-sectional area through which the fluid can flow may be increasingly reduced.

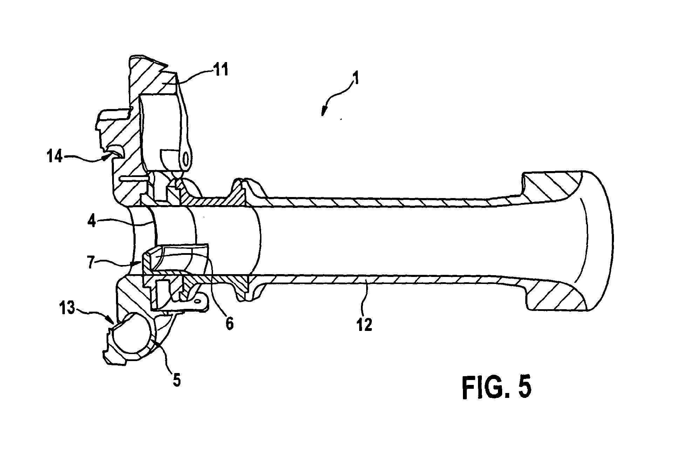

Embodiments of the restriction means 6 will now be described with reference to the figures 5 to 12.

Figure 5 illustrates a three-dimensional partial cross-sectional view of the radial compressor 1. In the view of figure 5, the compressor housing 11 and the inlet 12 are illustrated. For clarity, the impeller 2 is not illustrated. The housing comprises a cutout 13 in which provides the inlet 12, the inducer four, an outlet 14 and the scroll 5 for accommodating the impeller 2. The restriction means 6 is positionable within the inlet 12 and, in this embodiment, is positioned directly upstream of the inducer 4. In figure 5, the restriction means 6 is illustrated in the restricting position 7.

The restriction means 6, in the first embodiment, comprises dimensions so that in the restriction position 7, 23% of the area of the inlet 12 is occupied by the restriction means 6. This embodiment, the restriction means is positioned immediately upstream of the inducer 4 and impeller 2.

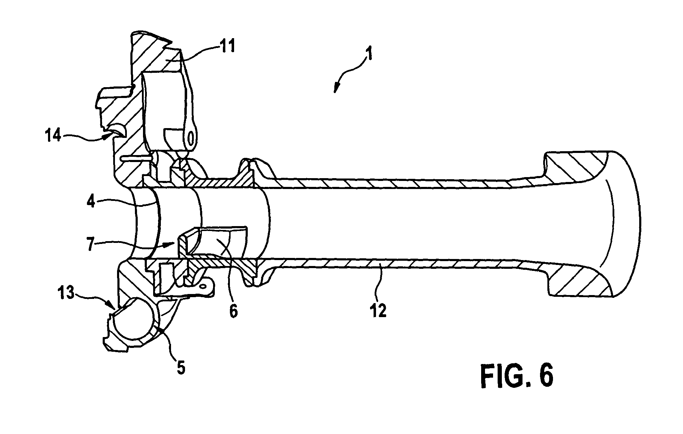

Figure 6 illustrates a three-dimensional partial cross-sectional view of the housing 11 of the radial compressor 1 including restriction means 6 according to a second embodiment. In the second embodiment, the restriction means 6 has the same dimensions as the restriction means 6 of the first embodiment illustrated in figure 5. However, in the second embodiment of figure 6, the restriction means 6 is positioned at a distance of 23 mm upstream of the inducer 4 and impeller 2.

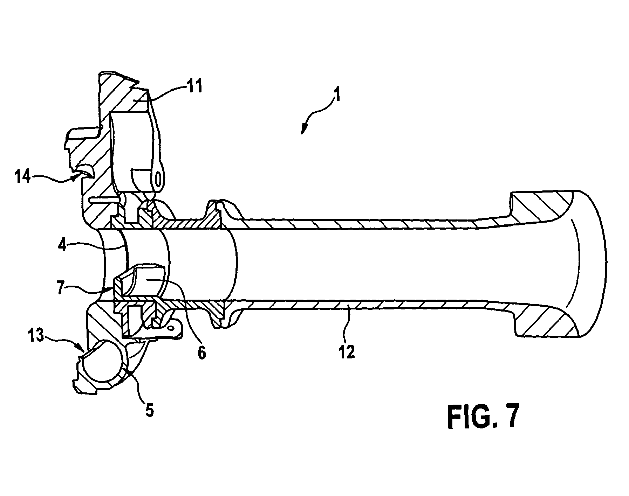

Figure 7 illustrates a three-dimensional partial cross-sectional view of the housing 11 of the radial compressor 1 including the restriction means 6 according to a third embodiment. In the third embodiment, the restriction means 6 has dimensions so that in the restriction position 7, the restriction means 6 occupies 50% of the cross-sectional area of the inlet. In the third embodiment of figure 7, the restriction means 6 is positioned directly upstream of the inducer 4 and impeller 2.

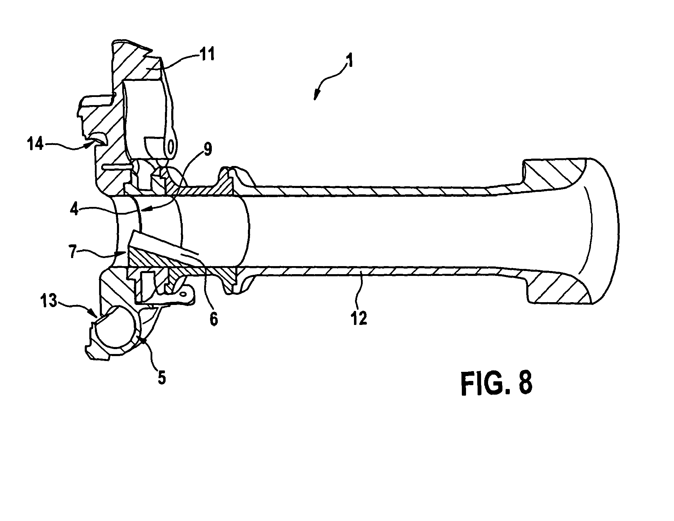

Figure 8 illustrates a three-dimensional partial cross-sectional view of the housing 11 of the radial compressor 1 including the restriction means 6 according to a fourth embodiment. In the fourth embodiment, the restriction means 6 has dimensions so that in position 7, the restriction means 6 occupies 23% of the cross-sectional area of the inlet 12. The restriction means 6 of the fourth embodiment is positioned directly upstream of the inducer 4 and impeller 2. The restriction means 6 of the fourth embodiment has a general trapezoidal form in which the downstream side face has a larger cross-sectional area than the upstream side face. The fluid flow is directed upwards by the restriction means 6 towards the upper portion 9 of the inducer 4 in the orientation of the compressor 1 illustrated in figure 8.

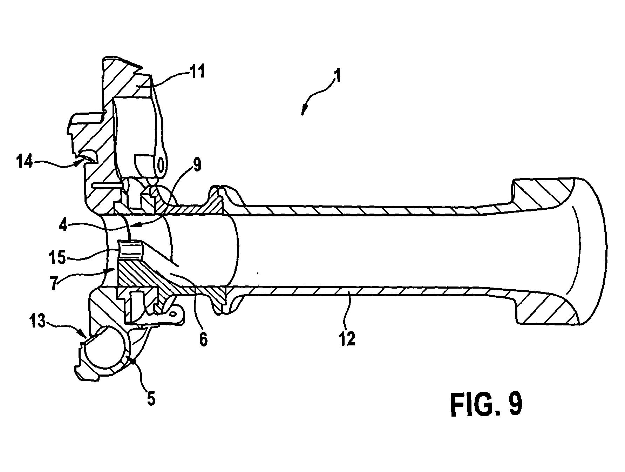

Figure 9 illustrates a three-dimensional partial cross-sectional view of the housing 11 of the radial compressor 1 including the restriction means 6 according to a fifth embodiment. In the fifth embodiment, the restriction means 6 has the dimensions so that in position 7, 50% of the area of the inlet 12 is occupied by the restriction means 6. The restriction is means 6 in the fifth embodiment is positioned directly upstream of the inducer 4 and impeller 2. The restriction means 6 of the fifth embodiment also comprises an upper surface having a cutout 15 to accommodate the non-illustrated shaft driving the impeller 2.

The restriction means of the fourth and fifth embodiments can also be adjusted so as to adjust the percentage of the cross-sectional area of the inlet 12 which is occupied by the restriction means 6. This may be achieved by pivoting the restriction means 6 about an axis positioned at the upstream end of the restriction means 6 so that an increasing proportion of the restriction means 6 protrudes into the inlet 12, thus occupying an increasingly large cross-sectional area of the inlet 12 and reducing the cross-sectional area of the inlet 12 through which the fluid can flow before impacting the impeller 2.

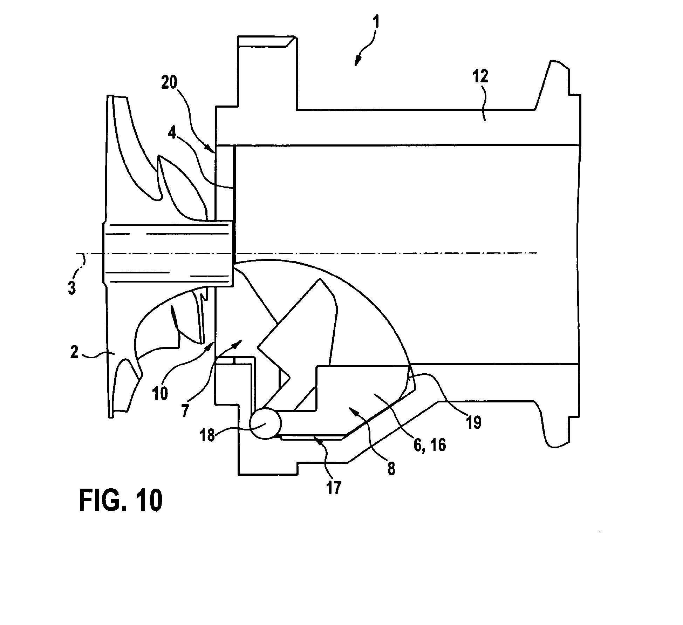

Figure 10 illustrates a side view of the radial compressor 1 in which impeller 2, inlet 12 and restriction means 6 are illustrated. The compressor housing 11 is not illustrated in figure 10 for clarity. Figure 10 illustrates the adjustment of the restriction means 6 according to a sixth embodiment.

The restriction means 6 has the form of a flap 16 which may be accommodated in a recess 17 adjacent the inlet 12. This corresponds to position 8 of Figure 1. The flap 16 can be introduced into the inlet 12 by rotating the flap 16 about pivot axis 18 which extends in a direction generally perpendicular to the impeller axis 3.

Three positions of the flap 16 are illustrated in figure 10. The flap 16 has a generally semicircular form so that in the vertical position 50% of the cross-sectional area of the inlet 12 is occupied by the flap 16. This corresponds to restriction position 7 of Figure 1. The flap 16 has a cutout 19 in which the non-illustrated shaft which drives the impeller 2 can be accommodated without touching the flap 16.

When the mass flow of the air upstream of the restriction means 16 falls below a certain value dependent on the compressor map the flap 16 is raised reducing the cross-sectional area of the inlet 12 and directing the air to flow in the upper region 20 of the inlet 12. The air flow in region 10 of the inducer 4 directly downstream of the flap 16 when in the raised position 7 is not impacted by the air flow. Therefore, the mass velocity of the air has a non-uniform distribution across the cross-sectional area of the inducer 4.

Figure 10 also illustrates unrestricted position 8 in which the flap 16 is accommodated within recess 17. In this position, the cross-sectional area of the inlet 12 is unrestricted by the flap 16.

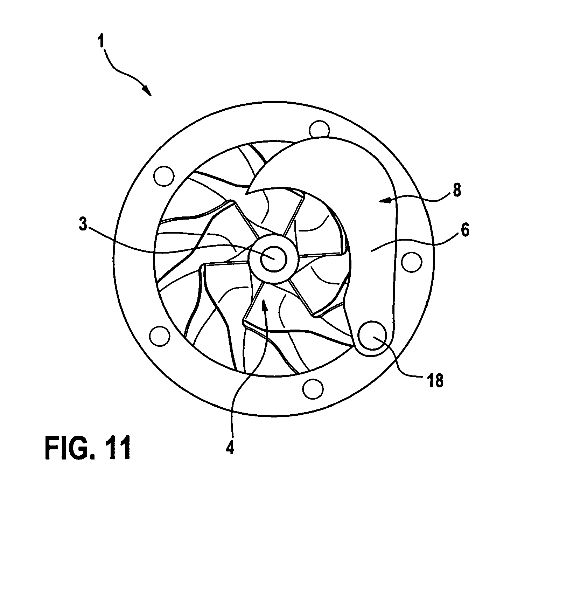

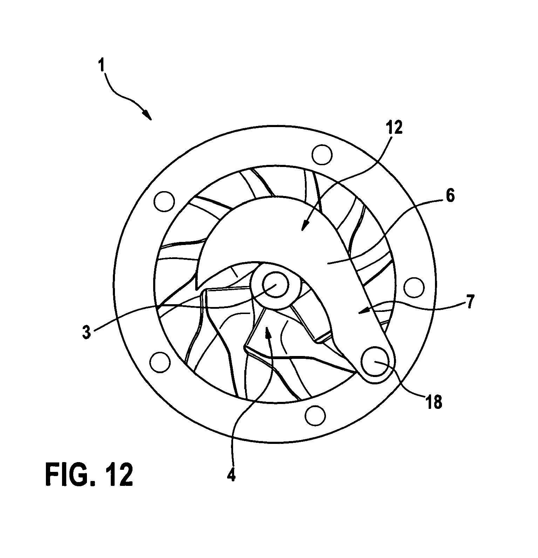

Figures 11 and 12 each illustrate a front view of a radial compressor 1 according to a seventh embodiment. In this seventh embodiment, the restriction means 6 is pivotable about a pivot axis which extends in a direction generally parallel to the impeller axis 3. Figure 11 illustrates the restriction means 6 positioned outside of the inducer 4 of the compressor 1. This corresponds to unrestricted position 8 illustrated in figures 1 and 3.

Figure 12 illustrates the restricted position 7 of the radial compressor 1 of the seventh embodiment in which the restriction means 6 is positioned so as to restricted is the cross-sectional area of the inlet 12 through which the fluid can flow. By comparing figures 11 and 12, one can see that the restriction means 6 is pivoted about pivot axis 18 which extends in a direction generally parallel to the impeller axis 3 in order to adjust the cross-sectional area of the inducer 4 which is blocked by the restriction means 6.

### Reference numbers

- 1: radial compressor
- 2: impeller
- 3: impeller axis
- 4: inducer
- 5: scroll
- 6: restriction means
- 7: restricted position
- 8: unrestricted position
- 9: first region of inducer
- 10: second region of inducer
- 11: compressor housing
- 12: inlet
- 13: cutout
- 14: outlet
- 15: cutout
- 16: flap
- 17: recess
- 18: pivot axis
- 19: cutout of flap
- 20: upper region of inlet

## Claims

1. Radial compressor (1), comprising:
- an impeller (2) having an impeller axis (3) about which the impeller (2) rotates to compress a fluid,
- an inlet (12) in flow communication with the impeller (2),
- an outlet (14) in flow communication with the impeller (2),
- restriction means (6) positionable within the inlet (12), and
- an inducer (4) defined by the cross-sectional area over which the fluid impacts the impeller (2) when the inlet (12) is in an unrestricted condition (8),
wherein the restriction means (6) is adjustable so as to reduce the cross-sectional area of the inlet (12) adjacent the inducer (4) and so as to cause a fluid having a mass velocity to impact the impeller (2) whilst the mass velocity of the fluid comprises a non-uniform distribution across the cross-sectional area of the inducer (4).

2. Radial compressor (1) according to claim 1,
**characterized in that**
the restriction means (6) is positionable within the inlet (12) so that the mass velocity of the fluid impacting the impeller (4) comprises, with respect to the impeller axis (3), an asymmetric distribution across the cross-sectional area of the inducer (4).

3. Radial compressor (1) according to claim 1 or claim 2,
**characterized in that**
the restriction means (6) is positionable within the inlet (12) so that the average mass velocity of air is increased downstream of the restriction means (6) in comparison to the average mass velocity upstream of the restriction means (6).

4. Radial compressor (1) according to one of claims 1 to 3,
**characterized in that**
the restriction means (6) is adjustable so as to reduce the cross-sectional area of the inlet (12).

5. Radial compressor (1) according to one of claims 1 to 4,
**characterized in that**
the restriction means (6) is adjustable so as to reduce the cross-sectional area of the inducer (4) which is impacted by the fluid.

6. Radial compressor (1) according to claim 5,
**characterized in that**
the cross-sectional area of the inducer impacted by the fluid (4) is reducible by 10% to 60%.

7. Radial compressor (1) according to one of claims 1 to 6,
**characterized in that**
the restriction means (6) is pivotable about a pivot axis (18) so as to variably reduce the cross-sectional area of the inlet (12).

8. Radial compressor (1) according to claim 7,
**characterized in that**
the pivot axis (18) extends in a direction generally perpendicular to the impeller axis (3).

9. Radial compressor (1) according to claim 7,
**characterized in that**
the pivot axis (18) extends in a direction generally parallel to the impeller axis (3).

10. Radial compressor (1) according to one of claims 7 to 9,
**characterized in that**
the restriction means (6) is provided in the form of a flap (16).

11. Radial compressor (1) according to one of claims 1 to 10,
**characterized in that**
the restriction means (6) is positioned directly upstream of the inducer (4).

12. Radial compressor (1) according to one of claims 1 to 11,
**characterized in that**
the distance between the impeller (2) and the restriction means (6) lies between 1 mm and a distance equal to 1.5 times the diameter of the inducer (4).

13. Radial compressor (1) according to one of claims 1 to 12,
**characterized in that**
the distance between the impeller (2) and the restriction means (6) at its closest point to the impeller (2) lies between 1 mm and a distance equal to 1.5 times the diameter of the inducer (4).

14. Radial compressor (1) according to one of claims 1 to 13,
**characterized in that**
the restriction means (6) is provided in the form of a trapezoid, wherein the downstream side face has a larger cross-section than the upstream side face.

15. Radial compressor (1) according to one of claims 1 to 14,
**characterized in that**
the restriction means (6) is provided in the form of a half-cylinder.

16. A turbocharger comprising a radial compressor (1) according to one of claims 1 to 15.

17. The turbocharger of claim 16,
**characterized in that**
the turbocharger is an exhaust driven turbocharger.

18. An internal combustion engine comprising the radial compressor (1) of one of claims 1 to 15.

19. A vehicle comprising the internal combustion engine of claim 18.

20. A radial compressor housing (11), comprising:
- a cutout (13) providing an inlet (12), an outlet (14) and a scroll (5) for accommodating an impeller (2) comprising an inducer (4) and having an impeller axis (3) about which the impeller (2) rotates to compress a fluid, wherein the inlet (12), the scroll (5) and the outlet (14) are in flow communication with one another,
- restriction means (6) positionable within the inlet (12),
wherein the inducer (4) is defined by the cross-sectional area over which the fluid impacts the impeller (2) when the inlet (12) is in an unrestricted condition (8), and
wherein the restriction means (6) is adjustable so as to reduce the cross-sectional area of the inlet (12) adjacent the inducer (4) and so as to cause a fluid to impact the impeller (2) whilst comprising a mass velocity comprising a non-uniform distribution across the cross-sectional area of the inducer (4).

21. Radial compressor housing (11) according to claim 20,
**characterized in that**
the restriction means (6) is positionable within the inlet (12) so that the mass velocity of the fluid comprises, with respect to the impeller axis (3), an asymmetric distribution across the cross-sectional area of the inducer (4).

22. Radial compressor housing (11) according to claim 20 or claim 21,
**characterized in that**
the restriction means (6) is positionable within the inlet (12) so that the average mass velocity of air is increased downstream of the restriction means (6) in comparison to the average mass velocity upstream of the restriction means (6).

23. Radial compressor housing (11) according to one of claims 20 to 22,
**characterized in that**
the restriction means (6) is adjustable so as to reduce the cross-sectional area of the inducer (4) which is impacted by the fluid.

24. Radial compressor housing (11) according to claim 23,
**characterized in that**
the cross-sectional area of the inducer (4) is reducible by 10% to 60%.

25. Radial compressor housing (11) according to one of claims 20 to 24,
**characterized in that**
the restriction means (6) is pivotable about a pivot axis (18) so as to variably reduce the cross-sectional area of the inlet (12).

26. Radial compressor housing (11) according to claim 25,
**characterized in that**
the pivot axis (18) extends in a direction generally perpendicular to the impeller axis (3).

27. Radial compressor housing (11) according to claim 25,
**characterized in that**
the pivot axis (18) extends in a direction generally parallel to the impeller axis (3).

28. Radial compressor housing (11) according to one of claims 25 to 27,
**characterized in that**
the restriction means (6) is provided in the form of a flap (16).

29. Radial compressor housing (11) according to one of claims 20 to 28,
**characterized in that**
the restriction means (6) is positioned directly upstream of the inducer (4).

30. Radial compressor housing (11) according to one of claims 20 to 29,
**characterized in that**
the distance between the impeller (2) and the restriction means (6) lies between 1 mm and a distance equal to 1.5 times the diameter of the inducer (4).

31. Radial compressor housing (11) according to one of claims 20 to 30,
**characterized in that**
the distance between the impeller (2) and the restriction means (6) at its closest point to the impeller (2) lies between 1 mm and a distance equal to 1.5 times the diameter of the inducer (4).

32. Radial compressor housing (11) according to one of claims 20 to 31,
**characterized in that**
the restriction means (6) is provided in the form of a trapezoid, wherein the downstream side face has a larger cross-sectional area than the upstream side face.

33. Radial compressor housing (11) according to one of claims 20 to 31,
**characterized in that**
the restriction means (6) is provided in the form of a half-cylinder.

34. Method of operating a radial compressor (1), the radial compressor (1) comprising an impeller (2) having an impeller axis (3) about which the impeller (2) rotates to compress a fluid, an inlet (12) in flow communication with the impeller (2), an outlet (14) in flow communication with the impeller (2) and an inducer (4) defined by the cross-sectional area over which the fluid impacts the impeller (2) when the inlet (12) is in an unrestricted condition (8),
the method comprising reducing the cross-sectional area of the inlet (12) so as to cause the fluid to impact the impeller (2) whilst comprising a mass velocity comprising a non-uniform distribution across the cross-sectional area of the inducer (4).

35. Method according to claim 34,
**characterized in that**
the cross-sectional area of the inlet (12) is reduced by positioning restriction means (6) within the inlet (12).

36. Method according to claim 34 or claim 35,
**characterized in that**
adjusting the restriction means (6) to reduce the cross-sectional area of the inlet (12) when the average mass flow of the fluid directly upstream of the restriction means (6) is less than 0.06 kg/s.

37. Method according to one of claims 34 to 36,
**characterized in that**
adjusting the restriction means (6) to reduce the cross-sectional area of the inlet (12) when the average mass flow of the fluid entering the inlet (12) is less than 0.06 kg/s.

38. Method according to one of claims 35 to 37,
**characterized in that**
the restriction means (6) is adjusted to reduce the cross-sectional area of the inlet (12) by 10% to 60%.

39. Method according to one of claims 35 to 38,
**characterized in that**
the restriction means (6) is pivoted about a pivot axis (18) so as to variably reduce the cross-sectional area of the inlet (12).

40. Method according to one of claims 35 to 38,
**characterized in that**
the restriction means (6) is pivoted about a pivot axis (18) extending in a direction generally perpendicular to the impeller axis (3).

41. Method according to one of claims 35 to 38,
**characterized in that**
the restriction means (6) is pivoted about a pivot axis (18) extending in a direction generally parallel to the impeller axis (3).

42. Method according to one of claims 34 to 41,
**characterized in that**
the method is performed and compressor surge is prevented.
